# EUROPÄISCHE PATENTANMELDUNG

(11) **EP 3 718 929 A1**
(43) Veröffentlichungstag der Anmeldung: **07.10.2020**
(21) Anmeldenummer: 20162292.5
(22) Anmeldetag: 11.03.2020
(51) Int. Cl.: B65G 1/04, B23Q 7/14

(54) **ANLAGE ZUM LAGERN UND/ODER ZUM KOMMISSIONIEREN VON ZU BEARBEITENDEN PRODUKTEN UND/ODER VON BEARBEITETEN PRODUKTEN EINER MASCHINELLEN WERKSTÜCKBEARBEITUNG SOWIE MASCHINELLE ANORDNUNG FÜR DIE WERKSTÜCKBEARBEITUNG MIT EINER DERARTIGEN ANLAGE**

(30) Priorität: 01.04.2019 DE 102019204600
(71) Anmelder: Trumpf Sachsen GmbH, 01904 Neukirch (DE)
(72) Erfinder: KOWAL, Franz, 01309 Dresden (DE); KELLNER, Benjamin, 02681 Schirgiswalde-Kirschau (DE); WOITASKE, Johannes, 02625 Bautzen (DE)
(74) Vertreter: Kohler Schmid Möbus Patentanwälte

(57) **Zusammenfassung**

Eine Anlage (1) zum Lagern und/oder zum Kommissionieren von zu bearbeitenden Produkten und/oder von bearbeiteten Produkten einer maschinellen Werkstückbearbeitung, insbesondere einer maschinellen Blechbearbeitung, umfasst ein Palettenlager (3) sowie ein Blocklager (4). Das Palettenlager (3) weist Lagerplätze (7) für Paletten (8) des Palettenlagers (3) sowie ein Lagerbediengerät (11) auf, mittels dessen eine Palette (8) innerhalb einer Reichweite des Lagerbediengerätes (11) zwischen einer Ausgangs- und einer Zielposition transferierbar ist. In dem Blocklager (4) sind Lagerbehälter (14) für Produkte der maschinellen Werkstückbearbeitung palettenlos unmittelbar aufeinander gestapelt. Mittels eines Shuttles (15) des Blocklagers (4) sind Lagerbehälter (14) des Blocklagers (4) innerhalb einer Reichweite des Shuttles (15) zwischen einer Ausgangs- und einer Zielposition transferierbar. Ein Umschlagplatz (19), der innerhalb der Reichweite des Shuttles (15) des Blocklagers (4) und innerhalb der Reichweite des Lagerbediengerätes (11) des Palettenlagers (3) angeordnet ist, bildet eine Schnittstelle zwischen dem Palettenlager (3) und dem Blocklager (4). Bei in die Umschlagposition bewegtem Shuttle (15) einerseits und an den Umschlagplatz (19) bewegtem Lagerbediengerät (11) oder an den Umschlagplatz (19) transferierter Palette (8) andererseits ist ein Lagerbehälter (14) des Blocklagers (4) zwischen dem Shuttle (15) einerseits und dem Lagerbediengerät (11) oder der Palette (8) andererseits transferierbar.

Eine maschinelle Anordnung (22) weist eine Bearbeitungsvorrichtung (23) für die maschinelle Werkstückbearbeitung, insbesondere für die maschinelle Blechbearbeitung, sowie eine Anlage (1) der vorgenannten Art auf.

## Beschreibung

Die Erfindung betrifft eine Anlage zum Lagern und/oder zum Kommissionieren von zu bearbeitenden Produkten und/oder von bearbeiteten Produkten einer maschinellen Werkstückbearbeitung, insbesondere einer maschinellen Blechbearbeitung, wobei die Anlage ein Palettenlager aufweist, mit Lagerplätzen, an denen Paletten des Palettenlagers anordenbar sind sowie mit einem Lagerbediengerät, mittels dessen eine Palette innerhalb einer Reichweite des Lagerbediengerätes zwischen einer Ausgangs- und einer Zielposition transferierbar ist.

Die Erfindung betrifft des Weiteren eine maschinelle Anordnung für die Werkstückbearbeitung, insbesondere für die Blechbearbeitung, mit einer Bearbeitungsvorrichtung, mittels derer durch maschinelle Bearbeitung von zu bearbeitenden Produkten der maschinellen Werkstückbearbeitung bearbeitete Produkte der maschinellen Werkstückbearbeitung erzeugbar sind sowie mit einer Anlage der vorgenannten Art.

Gattungsgemäßer Stand der Technik ist offenbart in EP 1 930 119 A1. Der Stand der Technik betrifft eine maschinelle Anlage für die Blechbearbeitung mit einer Lagerseite und einer Bearbeitungsseite. Die Lagerseite umfasst ein Palettenlager mit Lagerregalen, die ihrerseits eine Mehrzahl von Lagerplätzen für Paletten aufweisen. Die Bearbeitungsseite der vorbekannten Anlage wird von mehreren maschinellen Bearbeitungseinheiten gebildet. Zwischen dem Palettenlager der Lagerseite und den maschinellen Bearbeitungseinheiten der Bearbeitungsseite verkehren als Beschickungseinheiten vorgesehene Regalbediengeräte. Paletten, die mit zu bearbeitenden Rohblechen oder Halbzeugen oder mit an den Bearbeitungseinheiten der vorbekannten Anlage aus Rohblechen oder aus Halbzeugen erzeugten Fertigteilen beladen sind, werden mittels der Regalbediengeräte insbesondere zwischen der Lagerseite und der Bearbeitungsseite der vorbekannten Anlage transferiert.

Die Aufgabe der vorliegenden Erfindung besteht darin, eine kompakte Anlage zum Lagern und Kommissionieren von Produkten einer maschinellen Werkstückbearbeitung mit einem gegenüber dem Stand der Technik vergrößerten Leistungsvermögen bereitzustellen.

Erfindungsgemäß gelöst wird diese Aufgabe durch die Anlage gemäß Patentanspruch 1 und durch die maschinelle Anordnung gemäß Patentanspruch 10.

Im Falle der Erfindung sind ein Blocklager mit Lagerbehältern und ein Palettenlager in eine übergeordnete Anlage zum Lagern und/oder zum Kommissionieren von Produkten einer maschinellen Werkstückbearbeitung, insbesondere einer maschinellen Blechbearbeitung, integriert. Eine derartige Anlage ist Bestandteil der erfindungsgemäßen maschinellen Anordnung.

Das Blocklager der erfindungsgemäßen Anlage nimmt palettenlos unmittelbar aufeinander gestapelte Lagerbehälter auf und verfügt folglich bei geringem Platzbedarf über eine große Lagerkapazität. Das Blocklager wird im Falle der Erfindung genutzt, um die Lagerkapazität eines Palettenlagers unter Schaffung einer kompakten Gesamtanlage deutlich zu erweitern.

Darüber hinaus bietet das erfindungsgemäße Blocklager aufgrund seiner Ausführung als Behälterlager die Möglichkeit, Produkte zu lagern, die ihrer Art nach für eine behälterlose Lagerung auf Paletten eines Palettenlagers nicht oder nur bedingt geeignet sind. Insofern zeichnet sich die erfindungsgemäße Kombination eines Behälter-Blocklagers und eines Palettenlagers auch hinsichtlich der lagerbaren Produktarten durch ein besonderes Leistungsvermögen aus.

Der Umschlagplatz der erfindungsgemäßen Anlage bildet eine definierte Schnittstelle zwischen dem Blocklager und dem Palettenlager. Er ist sowohl für den Shuttle des Blocklagers als auch für das Lagerbediengerät des Palettenlagers und/oder die mittels des Lagerbediengeräts transferierbare Palette erreichbar. Der Umschlagplatz bietet folglich die Möglichkeit, beladene und/oder unbeladene Lagerbehälter des Blocklagers zwischen dem in eine Umschlagposition bewegten Shuttle des Blocklagers einerseits und dem an den Umschlagplatz bewegten Lagerbediengerät des Palettenlagers oder der mittels des Lagerbediengeräts an den Umschlagplatz bewegten Palette andererseits zu transferieren.

Beispielsweise können beladene und/oder unbeladene Lagerbehälter an dem Umschlagplatz von dem an den Umschlagplatz bewegten Lagerbediengerät des Palettenlagers oder von der mittels des Lagerbediengeräts an den Umschlagplatz transferierten Palette an den Shuttle des Blocklagers übergeben und anschließend mittels des Shuttles in dem Blocklager eingelagert werden. Ergänzend oder alternativ besteht die Möglichkeit, beladene und/oder unbeladene Lagerbehälter an dem Umschlagplatz von dem Shuttle des Blocklagers an das Lagerbediengerät oder die mittels des Lagerbediengeräts an den Umschlagplatz transferierte Palette zu übergeben.

Zur Kommissionierung von Produkten der Werkstückbearbeitung lassen sich etwa in einem Lagerbehälter des Blocklagers enthaltene Produkte der Werkstückbearbeitung und weitere Produkte der Werkstückbearbeitung zusammenführen, indem ein mit Produkten der Werkstückbearbeitung gefüllter Lagerbehälter mittels des Shuttles des Blocklagers aus diesem entnommen und anschließend an eine an den Umschlagplatz bewegte Palette übergeben wird, die bei der Übergabe des Lagerbehälters bereits mit weiteren Produkten der Werkstückbearbeitung beladen ist oder die im Anschluss an die Übergabe des Lagerbehälters mit weiteren Produkten der Werkstückbearbeitung beladen wird. Die Werkstückpalette mit dem gefüllten Lagerbehälter und den weiteren Produkten der Werkstückbearbeitung kann anschließend mittels des Lagerbediengeräts des Palettenlagers in dem Palettenlager eingelagert aber beispielsweise auch aus der Anlage abgeführt werden. Als Lagerbediengeräte des Palettenlagers der erfindungsgemäßen Anlage kommen beispielsweise herkömmliche Regalbediengeräte in Frage. Bei der an dem Umschlagplatz anzuordnenden Palette kann es sich um eine Systempalette des Palettenlagers oder um eine besonders gestaltete Transferpalette handeln.

Die Bearbeitungsvorrichtung der erfindungsgemäßen maschinellen Anordnung für die Werkstückbearbeitung, beispielsweise eine Maschine für die trennende Blechbearbeitung, kann aus Rohprodukten Bearbeitungsprodukte erzeugen, die für die Lagerbehälter des Blocklagers bestimmt sind, zusätzlich oder alternativ aber auch Bearbeitungsprodukte, die behälterlos auf einer Palette abgelegt werden.

Besondere Ausführungsarten der Anlage gemäß Patentanspruch 1 und der maschinellen Anordnung gemäß Patentanspruch 10 ergeben sich aus den abhängigen Patentansprüchen 2 bis 9 und 11 bis 15.

Ausweislich Patentanspruch 2 ist in vorteilhafter Ausgestaltung der Erfindung vorgesehen, dass der Transfer von Lagerbehältern des Blocklagers zwischen dem Shuttle des Blocklagers einerseits und dem an den Umschlagplatz bewegten Lagerbediengerät des Palettenlagers oder der an den Umschlagplatz bewegten Palette andererseits nicht mittels einer gesonderten Transfervorrichtung durchgeführt wird, sondern dass der Shuttle des Blocklagers auch den Behältertransfer übernimmt.

Im Falle der Erfindungsbauart gemäß Patentanspruch 3 ist der Shuttle des Blocklagers zu diesem Zweck mit einer Hubvorrichtung versehen, mittels derer sich Lagerbehälter des Blocklagers beim Transfer handhaben lassen.

Im Interesse einer Minimierung der Grundfläche der erfindungsgemäßen Anlage ist in Weiterbildung der Erfindung vorgesehen, dass das Palettenlager und das Blocklager in vertikaler Richtung übereinander angeordnet sind, wobei das Blocklager vorzugsweise oberhalb des Palettenlagers angeordnet ist (Patentanspruch 4).

Gemäß Patentanspruch 5 vollzieht sich auch der Transfer von Lagerbehältern des Blocklagers zwischen dem in die Umschlagposition bewegten Shuttle des Blocklagers einerseits und dem an den Umschlagplatz bewegten Lagerbediengerät des Palettenlagers oder der an den Umschlagplatz bewegten Palette andererseits innerhalb der Grundfläche des Blocklagers. Ist das Blocklager in vertikaler Richtung über dem Palettenlager angeordnet, so ist die anspruchsgemäße Transferöffnung für die Lagerbehälter des Blocklagers in einem Boden des Blocklagers und/oder in einer Decke des Palettenlagers ausgespart.

Im Falle der erfindungsgemäßen Anlage gemäß Patentanspruch 6 ist für den Shuttle des Blocklagers eine vertikal über den Lagerbehältern des Blocklagers angeordnete Trag- und Führungsstruktur vorgesehen. Auch die Trag- und Führungsstruktur für den Shuttle des Blocklagers liegt folglich wenigstens teilweise innerhalb der Grundfläche des Blocklagers.

In bevorzugter Ausgestaltung der Erfindung reicht dabei die Trag- und Führungsstruktur für den Shuttle des Blocklagers bis über den Umschlagplatz, so dass der Shuttle in der Umschlagposition über dem Umschlagplatz angeordnet ist (Patentanspruch 7).

Bei der Palette, die mittels des Lagerbediengeräts des Palettenlagers an den Umschlagplatz bewegt wird, um dort mit einem Lagerbehälter des Blocklagers beladen oder von einem Lagerbehälter des Blocklagers entladen zu werden, kann es sich um eine herkömmliche Systempalette des Palettenlagers handeln. Ausweislich der Patentansprüche 8 und 9 ist in weiterer bevorzugter Ausgestaltung der Erfindung aber vorgesehen, dass die Palette, die mittels des Lagerbediengeräts des Palettenlagers an den Umschlagplatz und damit in die Reichweite des Shuttles des Blocklagers bewegt wird, in besonderer Weise auf die von ihr zu übernehmende Funktion abgestimmt ist.

Gemäß Patentanspruch 8 ist die Palette mit Hilfsmitteln versehen, die eine definierte Positionierung von Lagerbehältern des Blocklagers und/oder eine definierte Positionierung von behälterlos abgelegten Produkten der Werkstückbearbeitung ermöglichen. Ausweislich Patentanspruch 9 weist die Palette definierte Bereiche auf, die entweder einem Lagerbehälter des Blocklagers oder behälterlos auf der Palette abgelegten Produkten der Werkstückbearbeitung vorbehalten sind.

Die Bauarten der erfindungsgemäßen maschinellen Anordnung gemäß den Patentansprüchen 11 bis 15 zeichnen sich durch einen hohen Integrationsgrad aus.

Ausweislich Patentanspruch 11 kann in bevorzugter Ausgestaltung der Erfindung das Lagerbediengerät des Palettenlagers oder die mittels des Lagerbediengeräts an den Umschlagplatz transferierbare Palette an einer Beladeposition der maschinellen Anordnung unmittelbar oder durch Beladen eines an das Lagerbediengerät oder an die Palette übergebenen Lagerbehälters des Blocklagers mit Produkten der Werkstückbearbeitung, vorzugsweise mit Bearbeitungsprodukten, beladen werden, die zuvor mittels der Bearbeitungsvorrichtung der maschinellen Anordnung erzeugt worden sind. Das Beladen des Lagerbediengeräts oder der mittels des Lagerbediengeräts an den Umschlagplatz transferierbaren Palette kann beispielsweise zum Zwecke der Kommissionierung von Produkten der Werkstückbearbeitung erfolgen.

In entsprechender Weise besteht im Falle der erfindungsgemäßen maschinellen Anordnung gemäß Patentanspruch 13 die Möglichkeit, das Lagerbediengerät des Palettenlagers oder die mittels des Lagerbediengeräts an den Umschlagplatz transferierbare Palette an einer Entladeposition der maschinellen Anordnung von Produkten der Werkstückbearbeitung zu entladen.

Insbesondere im Interesse einer Automatisierung der erfindungsgemäßen maschinellen Anordnung sind im Falle der Erfindungsbauarten gemäß Patentanspruch 12 und Patentanspruch 14 zum Be- und/oder zum Entladen des Lagerbediengeräts des Palettenlagers oder der mittels des Lagerbediengeräts an den Umschlagplatz transferierbaren Palette eine maschinelle Beladevorrichtung beziehungsweise eine maschinelle Entladevorrichtung vorgesehen.

Die maschinelle Anordnung gemäß Patentanspruch 15 bedient sich zur Bewegung der mittels des Lagerbediengeräts an den Umschlagplatz transferierbaren Palette oder des an die Palette übergebenen Lagerbehälters in die Beladeposition und/ oder in die Entladeposition einer Zwischenfördervorrichtung, die zusätzlich zu dem Lagerbediengerät des Palettenlagers vorgesehen ist.

Nachfolgend wir die Erfindung anhand beispielhafter schematischer Darstelllungen näher erläutert.

Es zeigen:
- Figur 1: eine Anlage zum Lagern und/oder zum Kommissionieren von zu bearbeitenden Blechen und von Fertigteilen einer maschinellen Blechbearbeitung mit einem unbeladenen Regalbediengerät in einer Ausgangsposition (Draufsicht),
- Figur 2: eine Schnittdarstellung der Anlage gemäß Figur 1 mit einer in Figur 1 senkrecht zu der Zeichenebene entlang der Linie II-II verlaufenden Schnittebene und mit dem aus der Ausgangsposition verfahrenen und nunmehr beladenen Regalbediengerät,
- Figur 3: eine maschinelle Anordnung für die Blechbearbeitung, welche die Anlage gemäß den Figuren 1 und 2 umfasst und
- Figur 4: Beispiele für die Kommissionierung von zu bearbeitenden und bearbeiteten Produkten einer trennenden Blechbearbeitung an der maschinellen Anordnung gemäß Figur 3.

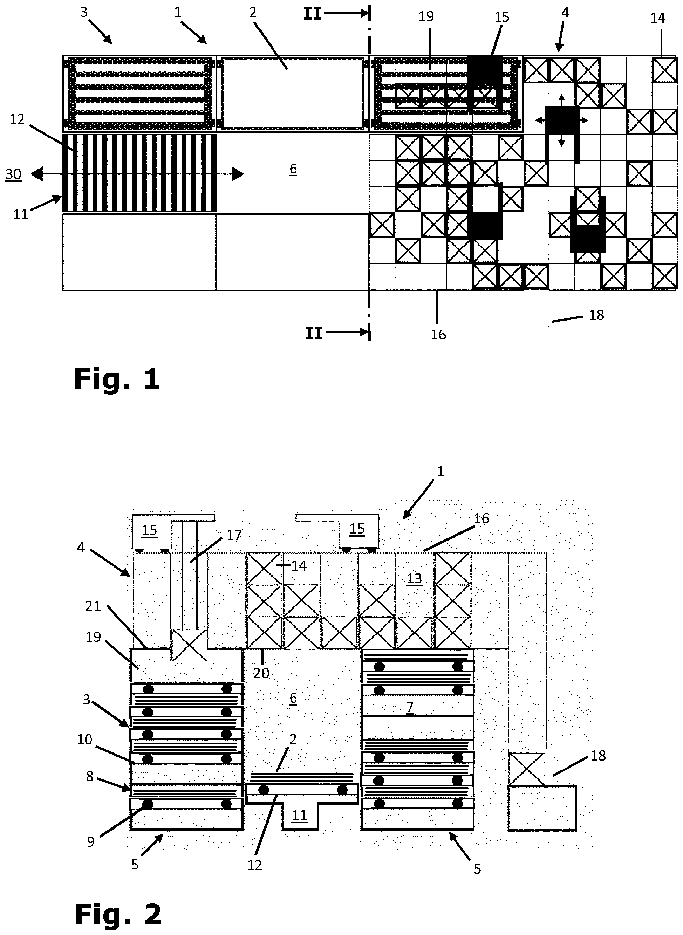

Gemäß den Figuren 1 und 2 umfasst eine Anlage 1 zum Lagern und zum Kommissionieren von zu bearbeitenden Blechen 2 und von nicht dargestellten Fertigteilen einer Blechbearbeitung ein Palettenlager 3 und ein auf das Palettenlager 3 aufgesetztes Blocklager 4.

Das Palettenlager 3 weist mehrere Lagerregale 5 auf, die zwei längs einer Regalgasse 6 verlaufende Regalreihen ausbilden. Jedes der Lagerregale 5 ist mit einer Mehrzahl übereinander angeordneter Lagerplätze 7 für Paletten 8 versehen. Die Paletten 8 weisen Laufrollen 9 auf, für die an den Lagerplätzen 7 der Lagerregale 5 in bekannter Weise Laufschienen 10 vorgesehen sind. Ein Teil der in Figur 2 sichtbaren Lagerplätze 7 ist mit Paletten 8 belegt, die ihrerseits mit zu bearbeitenden Blechen 2 beladen sind. Die übrigen Lagerplätze 7 in Figur 2 sind nicht belegt.

Ein als Lagerbediengerät des Palettenlagers 3 vorgesehenes Regalbediengerät 11 herkömmlicher Bauart ist in der Regalgasse 6 in deren Längsrichtung verfahrbar und außerdem in vertikaler Richtung heb- und senkbar. An einer Aufstellfläche 12 kann das Regalbediengerät 11 mit einer Palette 8 beladen werden. Außerdem weist das Regalbediengerät 11 einen nicht im Einzelnen dargestellten Fördermechanismus herkömmlicher Bauart auf. Ist das Regalbediengerät 11 mit seiner Aufstellfläche 12 auf Höhe der Laufschienen 10 eines der Lagerplätze 7 des Palettenlagers 3 angeordnet, so kann eine Palette 8 mittels des Fördermechanismus aus dem Lagerplatz 7 auf die Aufstellfläche 12 des Regalbediengeräts 11 gezogen oder von der Aufstellfläche 12 des Regalbediengeräts 11 auf den Lagerplatz 7 geschoben werden.

Bei dem Blocklager 4 der Anlage 1 handelt es sich um ein Behälterlager mit einem Lagerraum 13, in dem Lagerbehälter 14 palettenlos unmittelbar aufeinander gestapelt sind. Die Lagerbehälter 14 dienen in dem dargestellten Beispielsfall zur Aufnahme von Fertigteilen einer schneidenden Blechbearbeitung.

Vier Shuttles 15 des Blocklagers 4, von denen Figur 2 der Einfachheit halber lediglich zwei zeigt, sind zum Transfer der beladenen oder der unbeladenen Lagerbehälter 14 vorgesehen. Zu diesem Zweck können die Shuttles 15 an einer gitterartigen Trag- und Führungsstruktur 16 des Blocklagers 4 in horizontaler Richtung zweiachsig verfahren. Die Trag- und Führungsstruktur 16 ist über dem Lagerraum 13 des Blocklagers 4 angeordnet. Eine in den Figuren stark schematisch dargestellte Hubvorrichtung 17 der Shuttles 15 ermöglicht es, Lagerbehälter 14 in vertikaler Richtung zu fördern.

Mit Ausnahme eines Blocklagerein- und -ausgangs 18 liegt das Blocklager 4 vollständig innerhalb der Grundfläche des Palettenlagers 3, wobei sich das Blocklager 4 über etwa die Hälfte der Grundfläche des Palettenlagers 3 erstreckt.

In dem Bereich der gegenseitigen Überdeckung des Palettenlagers 3 und des Blocklagers 4 ist als Schnittstelle zwischen dem Palettenlager 3 und dem Blocklager 4 ein Umschlagplatz 19 vorgesehen. Ein Boden 20 des Lagerraums 13 des Blocklagers 4 ist in diesem Bereich mit einer Transferöffnung 21 versehen, so dass der Lagerraum 13 des Blocklagers 4 zu dem Umschlagplatz 19 hin offen ist.

Der Umschlagplatz 19 wird von einem Regalfach des betreffenden Lagerregals 5 gebildet. Er erstreckt sich längs der Regalgasse 6 des Palettenlagers 3 und ist zu der Regalgasse 6 hin offen. Die Trag- und Führungsstruktur 16 für die Shuttles 15 des Blocklagers 4 reicht bis über den Umschlagplatz 19. Folglich liegt der Umschlagplatz 19 sowohl innerhalb der Reichweite des Regalbediengeräts 11 des Palettenlagers 3 als auch innerhalb der Reichweite der Shuttles 15 des Blocklagers 4.

Die lichte Höhe des den Umschlagplatz 19 ausbildenden Regalfachs übersteigt die Höhe der für die Paletten 8 vorgesehenen Lagerplätze 7 des Palettenlagers 3 und ist derart gewählt, dass der Umschlagplatz 19 eine Palette 8 und zusätzlich einen oder mehrere auf einer Palette 8 nebeneinander abgestellte Lagerbehälter 14 des Blocklagers 4 aufnehmen kann. Ebenso wie die Lagerplätze 7 des Palettenlagers 3 weist auch der Umschlagplatz 19 Laufschienen 10 für die Laufrollen 9 einer Palette 8 auf.

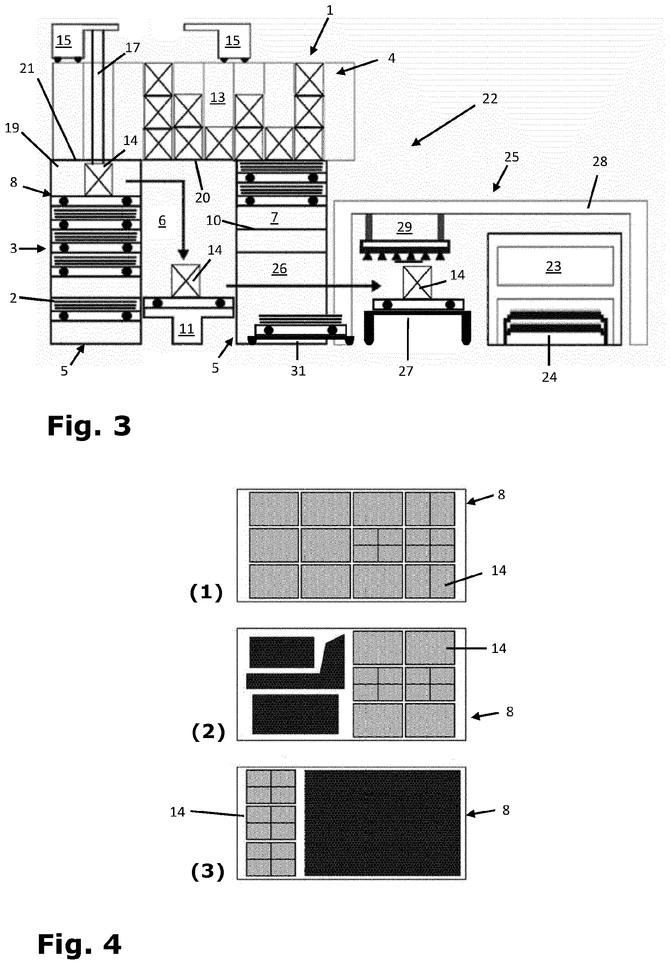

In Figur 3 ist die in den Figuren 1 und 2 dargestellte Anlage 1 zum Lagern und zum Kommissionieren von zu bearbeitenden Blechen 2 und von nicht dargestellten Fertigteilen einer Blechbearbeitung in eine maschinelle Anordnung 22 für die schneidende Blechbearbeitung integriert.

Zusätzlich zu der Anlage 1 umfasst die maschinelle Anordnung 22 eine als Bearbeitungsvorrichtung vorgesehene herkömmliche Laser-Flachbettmaschine 23 für die schneidende Blechbearbeitung, einen an der Laser-Flachbettmaschine 23 aufgestellten Palettenwechsler 24 üblicher Bauart sowie eine Be- und Entladestation 25.

Zur Anbindung der Be- und Entladestation 25 an die Anlage 1 weist das seitlich neben der Be- und Entladestation 25 angeordnete Lagerregal 5 des Palettenlagers 3 an Stelle mehrerer in Figur 2 übereinander angeordneter Lagerplätze 7 für Paletten 8 ein als Durchreiche 26 ausgebildetes Regalfach auf, dessen lichte Höhe entsprechend bemessen ist und das einerseits zu der Regalgasse 6 des Palettenlagers 3 und andererseits zu der Be- und Entladestation 25 offen ist.

Die Be- und Entladestation 25 der maschinellen Anordnung 22 umfasst einen als Zwischenfördervorrichtung vorgesehenen Produkt-Transferwagen 27, einen an einem Portal 28 horizontal verfahrbaren und außerdem heb- und senkbaren Saugerrahmen 29 herkömmlicher Bauart als maschinelle Be- und Entladevorrichtung sowie einen Rohblech-Transferwagen 31. Sowohl der Produkt-Transferwagen 27 als auch der Rohblech-Transferwagen 31 sind motorisch angetrieben und numerisch gesteuert in horizontaler Richtung verfahrbar. Das Fahrgestell des Produkt-Transferwagens 27 ist konstruktiv derart gestaltet, dass der Produkt-Transferwagen 27 den beladenen oder unbeladenen Rohblech-Transferwagen 31 überfahren kann.

Die Abläufe an der maschinellen Anordnung 22 sind vielfältig variierbar. Die nachstehende Funktionsbeschreibung ist dementsprechend nur beispielhafter Natur.

In Figur 1 ist das unbeladene Regalbediengerät 11 an einem Palettenlagerein- und -ausgang 30 gezeigt. Mittels des nicht gezeigten Fördermechanismus des Regalbediengeräts 11 wird eine mit einem Stapel von zu bearbeitenden Blechen 2 ("Rohbleche") beladene Palette 8 von einem Lagerplatz 7 des Palettenlagers 3 auf die Aufstellfläche 12 des Regalbediengeräts 11 gezogen. Anschließend verfährt das Regalbediengerät 11 mit der beladenen Palette 8 aus der Position gemäß Figur 1 längs der Regalgasse 6, bis die beladene Palette 8 auf Höhe der Durchreiche 26 an dem betreffenden Lagerregal 5 des Palettenlagers 3 zu liegen kommt. Mittels des Fördermechanismus des Regalbediengeräts 11 wird die beladene Palette 8 auf den in der Durchreiche 26 stehenden und zu diesem Zeitpunkt unbeladenen Rohblech-Transferwagen 31 geschoben. Der nunmehr beladene Rohblech-Transferwagen 31 bewegt sich samt Palette 8 zu dem Portal 28 der Be- und Entladestation 25 in eine Position unterhalb des Saugerrahmens 29. Der Saugerrahmen 29 nimmt das in dem Blechstapel auf der Palette 8 zuoberst liegende Blech 2 auf, verfährt mit dem Blech 2 längs des Querträgers des Portals 28 zu dem Palettenwechsler 24 und legt das Blech 2 auf der für den Saugerrahmen 29 zugänglichen Palette des Palettenwechslers 24 ab. Die auf diese Weise beladene Palette des Palettenwechslers 24 wird in gewohnter Weise in den Arbeitsbereich der Laser-Flachbettmaschine 23 bewegt, wo aus dem Blech 2 unter gleichzeitiger Erzeugung eines Restgitters Fertigteile ausgeschnitten werden.

Unmittelbar nachdem der Saugerrahmen 29 das anschließend bearbeitete Blech 2 von der auf dem Rohblech-Transferwagen 31 angeordneten Palette 8 entnommen hat, wird die mit den verbliebenen Blechen 2 beladene Palette 8 mittels des Rohblech-Transferwagens 31 in die Durchreiche 26 an dem betreffenden Lagerregal 5 zurückbewegt. Aus der Durchreiche 26 wird die mit den verbliebenen Blechen 2 beladene Palette 8 mittels des Fördermechanismus des Regalbediengeräts 11 von dem Rohblech-Transferwagen 31 auf die Aufstellfläche 12 des Regalbediengeräts 11 gezogen. Anschließend verfährt das Regalbediengerät 11 mit der Palette 8 und den darauf verbliebenen Blechen 2 zu einem freien Lagerplatz 7 des Palettenlagers 3, an welchem das Regalbediengerät 11 die mit den verbliebenen Blechen 2 beladene Palette 8 einlagert. Ein Funktionszustand der maschinellen Anordnung 22 beziehungsweise der Anlage 1, wie er sich bei der Fahrt des Regalbediengeräts 11 von der Durchreiche 26 an dem betreffenden Lagerregal 5 zu dem freien Lagerplatz 7 des Palettenlagers 3 ergeben kann, ist in Figur 2 dargestellt. Nach der Übergabe der mit den verbliebenen Blechen 2 beladenen Palette 8 an den betreffenden Lagerplatz 7 des Palettenlagers 3 befindet sich das Regalbediengerät 11 wieder im unbeladenen Zustand.

Alternativ kann der mit den verbliebenen Blechen 2 beladene Rohblech-Transferwagen 31 in der Position verbleiben, in welcher zuvor das in dem anfänglichen Blechstapel zuoberst liegende Blech 2 von dem Saugerrahmen 29 übernommen worden ist. Auch in diesem Fall ist das Regalbediengerät 11 unbeladen.

In jedem Fall übernimmt das unbeladene Regalbediengerät 11 an einem Lagerplatz 7 des Palettenlagers 3 eine leere Palette 8, während an der Laser-Flachbettmaschine 23 die schneidende Bearbeitung des zuvor in den Arbeitsbereich der Laser-Flachbettmaschine 23 bewegten Blechs 2 noch andauert. Mit der leeren Palette 8 verfährt das Regalbediengerät 11 längs der Regalgasse 6 bis auf Höhe des Umschlagplatzes 19. Mittels des Fördermechanismus des Regalbediengeräts 11 wird die leere Palette 8 an den Umschlagplatz 19 transferiert.

Währenddessen nimmt ein Shuttle 15 an dem Blocklager 4 einen dort eingelagerten leeren Lagerbehälter 14 auf und verfährt mit diesem entlang der Trag- und Führungsstruktur 16 des Blocklagers 4 in eine Umschlagposition oberhalb des Umschlagplatzes 19 (Figur 3).

Sobald das Regalbediengerät 11 die leere Palette 8 an den Umschlagplatz 19 übergeben hat, wird die Hubvorrichtung 17 des in die Umschlagposition verfahrenen Shuttles 15 betätigt und mittels der Hubvorrichtung 17 wird der von dem Shuttle 15 zuvor aufgenommene Lagerbehälter 14 durch die Transferöffnung 21 im Boden 20 des Blockregals 4 auf die an den Umschlagplatz 19 transferierte leere Palette 8 abgesenkt (Figur 3).

Die nunmehr mit dem leeren Lagerbehälter 14 beladene Palette 8 wird von dem vor dem Umschlagplatz 19 wartenden Regalbediengerät 11 übernommen und mit einer entsprechenden Verfahrbewegung des Regalbediengeräts 11 zu der Durchreiche 26 an dem mit dieser versehenen Lagerregal 5 transportiert (Figur 3).

An der Durchreiche 26 wartet inzwischen der unbeladene Produkt-Transferwagen 27. Mittels des Fördermechanismus des Regalbediengeräts 11 wird die mit dem leeren Lagerbehälter 14 beladene Palette 8 auf den Produkt-Transferwagen 27 geschoben, ehe der Produkt-Transferwagen 27 samt Palette 8 und Lagerbehälter 14 über den Rohblech-Transferwagen 31 hinweg zu dem Portal 28 und dem Saugerrahmen 29 der Be- und Entladestation 25 verfährt. Die Palette 8 und der leere Lagerbehälter 14 befinden sich damit in einer Beladeposition (Figur 3).

In der Zwischenzeit ist an der Laser-Flachbettmaschine 23 die Blechbearbeitung beendet und die nun mit einem Restgitter und den bei der Blechbearbeitung erzeugten Fertigteilen beladene Palette des Palettenwechslers 24 wird aus dem Arbeitsbereich der Laser-Flachbettmaschine 23 auf den Palettenwechsler 24 bewegt. Die Fertigteile auf der Palette an dem Palettenwechsler 24 werden mittels des Saugerrahmens 29 nacheinander aufgenommen und unter entsprechendem Verfahren des Saugerrahmens 29 längs des Querträgers des Portals 28 zu dem Produkt-Transferwagen 27 transportiert.

Gleichartige oder auch verschiedenartige Fertigteile, die entsprechend dimensioniert sind, werden von dem Saugerrahmen 29 in den anfangs leeren Lagerbehälter 14 abgeworfen. Diejenigen Fertigteile, die sich aufgrund ihrer Größe nicht in dem Lagerbehälter 14 unterbringen lassen, legt der Saugerrahmen 29 auf der in die Beladeposition transferierten Palette 8 neben dem Lagerbehälter 14 ab.

Die auf diese Weise kommissionierten Fertigteile der an der Laser-Flachbettmaschine 23 durchgeführten Blechbearbeitung werden gemeinsam aus der maschinellen Anordnung 22 abgeführt. Zu diesem Zweck wird die mit dem gefüllten Lagerbehälter 14 und den neben dem Lagerbehälter 14 abgelegten Fertigteilen beladene Palette 8 mittels des Produkt-Transferwagens 27 in die Durchreiche 26 an dem betreffenden Lagerregal 5 bewegt, dort in gewohnter Weise von dem Produkt-Transferwagen 27 auf das an der Durchreiche 26 wartende Regalbediengerät 11 transferiert und anschließend mit einer entsprechenden Verfahrbewegung des Regalbediengeräts 11 zu dem Palettenlagerein- und -ausgang 30 transportiert. Dort wird die mit den kommissionierten Fertigteilen beladene Palette 8 an einer nicht im Einzelnen gezeigten Ein-/Auslagerstation von einem Hubstapler übernommen und aus dem Nahbereich der maschinellen Anordnung 22 abgeführt.

Denkbar ist beispielsweise auch, dass die mit dem gefüllten Lagerbehälter 14 und den neben dem Lagerbehälter 14 abgelegten Fertigteilen beladene Palette 8 nach der Übergabe an das Regalbediengerät 11 von diesem an den Umschlagplatz 19 transferiert wird, wo ein in die Umschlagposition bewegter Shuttle 15 des Blocklagers 4 den gefüllten Lagerbehälter 14 von der Palette 8 entnimmt und anschließend in dem Blocklager 4 einlagert, während die Palette 8 mit den auf der Palette 8 verbliebenen und für den Lagerbehälter 14 zu großen Fertigteilen mittels des Regalbediengeräts 11 von dem Umschlagplatz 19 abgeführt und in dem Palettenlager 3 eingelagert wird.

Es ist auch denkbar, dass am Umschlagplatz 19 weitere Lagerbehälter 14, die bereits mit Fertigteilen im Blocklager 4 eingelagert sind, auf der Palette 8 positioniert werden und diese neu kommissionierte Palette 8 zum Palettenlagerein- und -ausgang 30 transportiert wird.

Denkbar ist auch ein Weitertransport der Palette 8 zu einer weiteren maschinellen Anordnung, um bearbeitete Werkstücke final zu bearbeiten bzw. eine Kommissionierung mit weiteren Fertigteilen entsprechend Produktionsauftrag vorzunehmen.

Mögliche Ergebnisse der an der Be- und Entladestation 25 der maschinellen Anordnung 22 oder am Umschlagplatz 19 vorgenommenen Kommissionierung von zu bearbeitenden und bearbeiteten Produkten der an der Laser-Flachbettmaschine 23 durchgeführten Blechbearbeitung sind beispielhaft in Figur 4 dargestellt.

Teildarstellung (1) von Figur 4 zeigt eine Palette 8, die ausschließlich mit Lagerbehältern 14 des Blocklagers 4 beladen ist, wobei die Lagerbehälter 14 mit nicht im Einzelnen dargestellten Fertigteilen gefüllt sind. Die Lagerbehälter 14 weisen in dem dargestellten Beispielsfall verschiedenartige Unterteilungen auf.

Gemäß Teildarstellung (2) von Figur 4 wurden mehrere mit Fertigteilen gefüllte Lagerbehälter 14 und mehrere neben den Lagerbehältern 14 abgelegte Fertigteile auf einer Palette 8 zusammengestellt.

Die Palette 8 der Teildarstellung (3) von Figur 4 ist mit mehreren jeweils mit Fertigteilen gefüllten Lagerbehältern 14 und außerdem mit einem neben den Lagerbehältern 14 abgelegten und noch zu bearbeitenden Restblech beladen.

In allen Fällen erfolgte die Kommissionierung auf der jeweiligen Palette 8 numerisch gesteuert. An dem Umschlagplatz 19 wurden die Paletten 8 durch numerische Steuerung des Regalbediengeräts 11 und/oder durch numerisch gesteuerte Positionierung des eingesetzten Shuttles 15 an definierten Stellen mit den in Rede stehenden Lagerbehältern 14 beladen. Entsprechend wurde der Saugerrahmen 29 an der Be- und Entladestation 25 numerisch derart gesteuert, dass die an dem Palettenwechsler 24 aufgenommenen Fertigteile an den vorgesehenen Ablageort auf der Palette 8 gelangten. Den Lagerbehältern 14 und den außerhalb der Lagerbehälter 14 abzulegenden Fertigteilen waren dabei jeweils zuvor definierte und in einer numerischen Steuerung der maschinellen Anordnung 22 hinterlegte Zonen an der Oberseite der Palette 8 zugeordnet.

In dem vorstehend beschriebenen Beispielsfall werden für die Kommissionierung von zu bearbeitenden und bearbeiteten Produkten der an der Laser-Flachbettmaschine 23 durchgeführten Blechbearbeitung als Paletten 8 reguläre Systempaletten des Palettenlagers 3 verwendet. Alternativ besteht die Möglichkeit, für die genannte Kommissionierung Sonderbauarten von Paletten zu verwenden. Denkbar sind beispielsweise Paletten mit an der Oberseite vorgesehenen und auf die Kontur der Lagerbehälter 14 und/oder auf die Kontur der abzulegenden Fertigteile abgestimmten Vertiefungen, welche die auf der Palette abgelegten Lagerbehälter 14 und Fertigteile während Palettenbewegungen gegen Verrutschen sichern.

Abweichend von der vorstehenden Beschreibung besteht auch die Möglichkeit, dass der Saugerrahmen 29 der maschinellen Anordnung 22 zum Zwecke der Kommissionierung von zu bearbeitenden und bearbeiteten Produkten der an der Laser-Flachbettmaschine 23 durchgeführten Blechbearbeitung etwa bei der Blechbearbeitung erzeugte Fertigteile von einer auf dem Produkt-Transferwagen 27 in einer Entladeposition angeordneten Palette 8 oder aus einem auf der Palette 8 abgestellten Lagerbehälter 14 entnimmt.

## Patentansprüche

1. Anlage zum Lagern und/oder zum Kommissionieren von zu bearbeitenden Produkten und/oder von bearbeiteten Produkten einer maschinellen Werkstückbearbeitung, insbesondere einer maschinellen Blechbearbeitung, wobei die Anlage ein Palettenlager (3) aufweist, mit Lagerplätzen (7), an denen Paletten (8) des Palettenlagers (3) anordenbar sind sowie mit einem Lagerbediengerät (11), mittels dessen eine Palette (8) innerhalb einer Reichweite des Lagerbediengerätes (11) zwischen einer Ausgangs- und einer Zielposition transferierbar ist,
**dadurch gekennzeichnet,**
• **dass** die Anlage zusätzlich zu dem Palettenlager (3) ein Blocklager (4) umfasst, in welchem Lagerbehälter (14) für die Produkte der maschinellen Werkstückbearbeitung palettenlos unmittelbar aufeinander gestapelt sind und welches wenigstens einen Shuttle (15) aufweist, mittels dessen Lagerbehälter (14) des Blocklagers (4) innerhalb einer Reichweite des Shuttles (15) zwischen einer Ausgangs- und einer Zielposition transferierbar sind,
• **dass** ein Umschlagplatz (19) vorgesehen ist, der innerhalb der Reichweite des Shuttles (15) des Blocklagers (4) und innerhalb der Reichweite des Lagerbediengerätes (11) des Palettenlagers (3) angeordnet ist und an welchen das Lagerbediengerät (11) bewegbar und/oder an welchen die Palette (8) mittels des Lagerbediengerätes (11) transferierbar ist,
• **dass** der Shuttle (15) des Blocklagers (4) relativ zu dem Umschlagplatz (19) in eine Umschlagposition bewegbar ist und
• **dass** bei in die Umschlagposition bewegtem Shuttle (15) einerseits und an den Umschlagplatz (19) bewegtem Lagerbediengerät (11) oder an den Umschlagplatz (19) transferierter Palette (8) andererseits ein Lagerbehälter (14) des Blocklagers (4) zwischen dem Shuttle (15) einerseits und dem Lagerbediengerät (11) oder der Palette (8) andererseits transferierbar und dadurch das Lagerbediengerät (11) oder die Palette (8) mit dem Lagerbehälter (14) des Blocklagers (4) beladbar oder von dem Lagerbehälter (14) des Blocklagers (4) entladbar ist.

2. Anlage nach Anspruch 1 **dadurch gekennzeichnet, dass** der Lagerbehälter (14) des Blocklagers (4) zwischen dem Shuttle (15) des Blocklagers (4) einerseits und dem Lagerbediengerät (11) des Palettenlagers (3) oder der Palette (8) andererseits transferierbar ist, indem mittels des in die Umschlagposition bewegten Shuttles (15) der Lagerbehälter (14) des Blocklagers (4) an das an den Umschlagplatz (19) bewegte Lagerbediengerät (11) oder an die an den Umschlagplatz (19) transferierte Palette (8) übergebbar oder von dem an den Umschlagplatz (19) bewegten Lagerbediengerät (11) oder von der an den Umschlagplatz (19) transferierten Palette (8) entnehmbar ist.

3. Anlage nach Anspruch 2, **dadurch gekennzeichnet, dass** der Shuttle (15) des Blocklagers (4) eine Hubvorrichtung (17) aufweist, mittels derer der Lagerbehälter (14) des Blocklagers (4) bei in die Umschlagposition bewegtem Shuttle (15) an das an den Umschlagplatz (19) bewegte Lagerbediengerät (11) des Palettenlagers (3) oder an die an den Umschlagplatz (19) transferierte Palette (8) übergebbar oder von dem an den Umschlagplatz (19) bewegten Lagerbediengerät (11) oder von der an den Umschlagplatz (19) transferierten Palette (8) entnehmbar ist.

4. Anlage nach einem der vorhergehenden Ansprüche, **dadurch gekennzeichnet, dass** das Palettenlager (3) und das Blocklager (4) in vertikaler Richtung übereinander angeordnet sind, wobei vorzugsweise das Blocklager (4) oberhalb des Palettenlagers (3) angeordnet ist.

5. Anlage nach Anspruch 4, **dadurch gekennzeichnet, dass** das Blocklager (4) zur Aufnahme von Lagerbehältern (14) einen Lagerraum (13) aufweist, dass der Lagerraum (13) des Blocklagers (4) und der Umschlagplatz (19) einander überlappen und dass der Lagerraum (13) des Blocklagers (4) zu dem Umschlagplatz (19) hin unter Ausbildung einer Transferöffnung (21) offen ist, durch welche der Lagerbehälter (14) des Blocklagers (4) zwischen dem in die Umschlagposition bewegten Shuttle (15) des Blocklagers (4) einerseits und dem an den Umschlagplatz (19) bewegten Lagerbediengerät (11) des Palettenlagers (3) oder der an den Umschlagplatz (19) transferierten Palette (8) andererseits transferierbar ist.

6. Anlage nach Anspruch 4 oder Anspruch 5, wobei das Blocklager (4) über dem Palettenlager (3) angeordnet ist, **dadurch gekennzeichnet, dass** für den Shuttle (15) des Blocklagers (4) eine Trag- und Führungsstruktur (16) vorgesehen ist, die oberhalb der in dem Blocklager (4) gelagerten Lagerbehälter (14) verläuft und entlang derer der Shuttle (15) zum Transfer von Lagerbehältern (14) des Blocklagers (4) horizontal bewegbar ist.

7. Anlage nach Anspruch 6, **dadurch gekennzeichnet, dass** sich die Trag- und Führungsstruktur (16) des Shuttles (15) des Blocklagers (4) bis zu dem Umschlagplatz (19) erstreckt derart, dass der in die Umschlagposition bewegte Shuttle (15) oberhalb des Umschlagplatzes (19) angeordnet ist.

8. Anlage nach einem der vorhergehenden Ansprüche, **dadurch gekennzeichnet, dass** die mittels des Lagerbediengerätes (11) des Palettenlagers (3) an den Umschlagplatz (19) transferierbare Palette (8) mit einer Einrichtung zur definierten Positionierung von Produkten der maschinellen Werkstückbearbeitung und/oder zur definierten Positionierung des Lagerbehälters (14) des Blocklagers (4) versehen ist.

9. Anlage nach einem der vorhergehenden Ansprüche, **dadurch gekennzeichnet, dass** die mittels des Lagerbediengerätes (11) des Palettenlagers (3) an den Umschlagplatz (19) transferierbare Palette (8) an der Oberseite definiert zoniert ist und wenigstens eine Zone zur behälterlosen Anordnung von Produkten der maschinellen Werkstückbearbeitung und/oder wenigstens eine Zone zur Anordnung des Lagerbehälters (14) des Blocklagers (4) aufweist.

10. Maschinelle Anordnung für die Werkstückbearbeitung, insbesondere für die Blechbearbeitung, mit einer Bearbeitungsvorrichtung (23), mittels derer durch maschinelle Bearbeitung von zu bearbeitenden Produkten der maschinellen Werkstückbearbeitung bearbeitete Produkte der maschinellen Werkstückbearbeitung erzeugbar sind sowie mit einer Anlage (1) zum Lagern und/oder zum Kommissionieren von Produkten der maschinellen Werkstückbearbeitung, **dadurch gekennzeichnet, dass** als Anlage (1) zum Lagern und/oder zum Kommissionieren von Produkten der maschinellen Werkstückbearbeitung die Anlage (1) nach einem der vorhergehenden Ansprüche vorgesehen ist.

11. Maschinelle Anordnung nach Anspruch 10, **dadurch gekennzeichnet, dass** das Lagerbediengerät (11) des Palettenlagers (3) oder mittels des Lagerbediengerätes (11) die mittels des Lagerbediengerätes (11) an den Umschlagplatz (19) transferierbare Palette (8) oder der an das Lagerbediengerät (11) oder an die Palette (8) übergebene Lagerbehälter (14) des Blocklagers (4) in eine Beladeposition bewegbar ist, wobei das Lagerbediengerät (11) oder die Palette (8) oder der an das Lagerbediengerät (11) oder an die Palette (8) übergebene Lagerbehälter (14) des Blocklagers (4) in der Beladeposition mit Produkten der maschinellen Werkstückbearbeitung beladbar ist.

12. Maschinelle Anordnung nach Anspruch 11, **dadurch gekennzeichnet, dass** die maschinelle Anordnung eine maschinelle Beladevorrichtung (29) aufweist und dass das Lagerbediengerät (11) des Palettenlagers (3) oder die mittels des Lagerbediengerätes (11) an den Umschlagplatz (19) transferierbare Palette (8) oder der an das Lagerbediengerät (11) oder an die Palette (8) übergebene Lagerbehälter (14) des Blocklagers (4) in der Beladeposition mittels der maschinellen Beladevorrichtung (29) mit Produkten der maschinellen Werkstückbearbeitung beladbar ist.

13. Maschinelle Anordnung nach einem der Ansprüche 10 bis 12, **dadurch gekennzeichnet, dass** das Lagerbediengerät (11) des Palettenlagers (3) oder mittels des Lagerbediengerätes (11) die mittels des Lagerbediengerätes (11) an den Umschlagplatz (19) transferierbare Palette (8) oder der an das Lagerbediengerät (11) oder an die Palette (8) übergebene Lagerbehälter (14) des Blocklagers (4) in eine Entladeposition bewegbar ist, wobei Produkte der maschinellen Werkstückbearbeitung von dem in die Entladeposition bewegten Lagerbediengerät (11) oder von der in die Entladeposition transferierten Palette (8) oder von dem an das Lagerbediengerät (11) oder an die Palette (8) übergebenen und in die Entladeposition bewegten Lagerbehälter (14) des Blocklagers (4) entladbar sind.

14. Maschinelle Anordnung nach Anspruch 13, **dadurch gekennzeichnet, dass** die maschinelle Anordnung eine maschinelle Entladevorrichtung (29) aufweist und dass Produkte der maschinellen Werkstückbearbeitung mittels der maschinellen Entladevorrichtung (29) von dem in die Entladeposition bewegten Lagerbediengerät (11) oder von der in die Entladeposition transferierten Palette (8) oder von dem an das Lagerbediengerät (11) oder an die Palette (8) übergebenen und in die Entladeposition bewegten Lagerbehälter (14) des Blocklagers (4) entladbar sind.

15. Maschinelle Anordnung nach einem der Ansprüche 11 bis 14, **dadurch gekennzeichnet, dass** eine Zwischenfördervorrichtung (27) vorgesehen ist und dass die mittels des Lagerbediengerätes (11) an den Umschlagplatz (19) transferierbare Palette (8) oder der an die Palette (8) übergebene Lagerbehälter (14) des Blocklagers (4) mittels des Lagerbediengerätes (11) in die Beladeposition oder in die Entladeposition bewegbar ist, indem die Palette (8) zwischen dem Lagerbediengerät (11) und der Zwischenfördervorrichtung (27) transferierbar und mittels der Zwischenfördervorrichtung (27) in die Beladeposition oder in die Entladeposition bewegbar ist.
